# EUROPÄISCHE PATENTANMELDUNG

(11) **EP 4 725 317 A1**
(43) Veröffentlichungstag der Anmeldung: **15.04.2026**
(21) Anmeldenummer: 25207809.2
(22) Anmeldetag: 09.10.2025
(51) Int. Cl.: A23L 2/02, A23L 33/105, A23L 33/15, A23L 33/21

(54) **NAHRUNGSERGÄNZUNGSMITTEL**

(30) Priorität: 09.10.2024 DE 102024129162
(71) Anmelder: Seyda, Stefanie, 58540 Meinerzhagen (DE)
(72) Erfinder: Seyda, Stefanie, 58540 Meinerzhagen (DE)
(74) Vertreter: Janke Scholl Patentanwälte PartG mbB

(57) **Zusammenfassung**

Es wird eine Zusammensetzung zur Unterstützung des menschlichen Immunsystems beansprucht, die insbesondere zur Verwendung als Nahrungsergänzungsmittel geeignet ist und die Saftkonzentrate, Fruchtpürees und/oder Extrakte aus Acerola Früchten und Gemüsen ausgewählt aus Apfel, Sauerkirsche, Cranberry, Aronia, Acerola, Granatapfel, Hagebutte, Papaya, Ingwer, Rote Beete, Gerstengras, Ginkgo, Moringa, Spirulina grün, Shatavari, Spirulina blau, Spirulina rot, Goji, Ashwaganda, Ginseng, Grünkohl, Topinambur, Acai, Matcha, Fenchel süß, Yamswurzel, Kurkuma, Artischocke, Chicorée. Löwenzahnblätter, Grüntee, Baobab, Astragalus, Schisandra, Alfalfa, Brennnesselblätter, Guarana, Brokkoli, Kastanie, Chlorella, Amaranth, Flohsamenschalen, Leinsamen, Salbei, Zitronengras, Thymian, Rosmarin, Safran, Damian, Gotu Kola, Kichererbse, Camu Camu, Chaga, Heidelbeere, Himbeere, Zimt, Reishi, Traubenkern und beliebigen Mischungen der voranstehenden sowie 3 bis 10% Inulin als Ballaststoff enthält. Die Komponenten sind derart ausgewählt, dass ihre Wirkungen optimal aufeinander abgestimmt sind und sich das Zusammenspiel der Komponenten insgesamt positiv auf die Gesamtkonstitution auswirkt.

## Beschreibung

Die Erfindung betrifft eine Zusammensetzung zur Unterstützung des menschlichen Immunsystems, insbesondere zur Verwendung als Nahrungsergänzungsmittel.

Zu den sogenannten Superfoods werden Lebensmittel gezählt, die einen besonders hohen Gehalt an Vitaminen, Mineralstoffen, Spurenelemente und/oder sekundären Pflanzenstoffen aufweisen und daher als besonders gesundheitsfördernd gelten.

Im Handel sind verschiedenste Nahrungsergänzungsmittel erhältlich, die beispielsweise begleitend zu einer Diät oder auch zum Ausgleich von Nährstoffmängeln eingenommen werden. Bei den Nahrungsergänzungsmitteln handelt es sich um Lebensmittel, die sich von anderen Lebensmitteln des allgemeinen Verzehrs dadurch unterscheiden, dass sie in kleinen Dosierungen, etwa als Tabletten oder Kapseln angeboten werden. Sie enthalten Vitamine, Mineralstoffe und/oder sonstige Stoffe in mit ernährungsspezifischer oder physiologischer Wirkung in einer Konzentration, die höher ist als die in üblichen Lebensmitteln. Anders als Arzneimittel sollen diese Mittel lediglich die normale Ernährung ergänzen und Defizite ausgleichen.

Viele Nahrungsergänzungsmittel enthalten nur einzelne oder wenige Inhaltsstoffe. Auch werden sie vielfach in Form von Tabletten, Kapseln oder Flüssigkeiten angeboten, die Inhaltsstoffe synthetischen Ursprungs enthalten. Viele synthetisch hergestellte Stoffe haben oft den Nachteil, dass sie vom Körper schlechter aufgenommen werden, als solche natürlichen Ursprungs. Darüber hinaus werden viele der in Nahrungsergänzungsmitteln enthaltenen Stoffe besser vom Körper aufgenommen und verarbeitet, wenn sie in Gegenwart von anderen Stoffen aufgenommen werden.

Der vorliegenden Erfindung lag die Aufgabe zugrunde, eine Zusammensetzung zur Unterstützung des menschlichen Immunsystems zur Verfügung zu stellen, die insbesondere zur Verwendung als Nahrungsergänzungsmittel geeignet ist. Eine weitere Aufgabe ist, dass die Zusammensetzung im wesentlichen Inhaltsstoffe natürlichen Ursprungs aufweisen soll. Auch sollte die Zusammensetzung die wichtigsten Vitamine, Mineralstoffe, Spurenelemente und sekundären Pflanzenstoffe in einer solchen Menge und einem solchen Mischungsverhältnis enthalten, dass sie möglichst vollständig vom Körper aufgenommen und verarbeitet werden.

Gegenstand der vorliegenden Erfindung ist eine Zusammensetzung zur Unterstützung des menschlichen Immunsystems, insbesondere zur Verwendung als Nahrungsergänzungsmittel, enthaltend Saftkonzentrate, Fruchtpürees und/oder Extrakte aus Konzentration Früchten und Gemüsen ausgewählt aus Apfel, Sauerkirsche, Cranberry, Aronia, Acerola, Granatapfel, Hagebutte, Papaya, Ingwer, Rote Beete, Gerstengras, Ginkgo, Moringa, Spirulina grün, Shatavari, Spirulina blau, Spirulina rot, Goji, Ashwaganda, Ginseng, Grünkohl, Topinambur, Acai, Matcha, Fenchel süß, Yamswurzel, Kurkuma, Artischocke, Chicorée. Löwenzahnblätter, Grüntee, Baobab, Astragalus, Schisandra, Alfalfa, Brennnesselblätter, Guarana, Brokkoli, Kastanie, Chlorella, Amaranth, Flohsamenschalen, Leinsamen, Salbei, Zitronengras, Thymian, Rosmarin, Safran, Damian, Gotu Kola, Kichererbse, Camu Camu, Chaga, Heidelbeere, Himbeere, Zimt, Reishi, Traubenkern, und beliebigen Mischungen der voranstehenden, dadurch gekennzeichnet, dass die Zusammensetzung 3 bis 10% Inulin als Ballaststoff enthält.

Die erfindungsgemäße Zusammensetzung enthält vorzugsweise ausschließlich Produkte natürlichen Ursprungs und besonders bevorzugt solche, die nach Kriterien der ökologischen Landbaus erzeugt wurden. Die Verarbeitung der eingesetzten Pflanzen sollte vorzugsweise schonend erfolgen, um den Gehalt der für ein Nahrungsergänzungsmittel gewünschten Inhaltsstoffe nicht zu beeinträchtigen bzw. zu reduzieren. Der Vorteil der erfindungsgemäß enthaltenen Komponenten ist, dass sie nicht wie Arzneimittel, nur an einem Organ oder Ort im Körper ihre Wirkung entfalten, sondern sich das Zusammenspiel der Komponenten insgesamt positiv auf die Gesamtkonstitution auswirkt. Die Auswahl der einzelnen Komponenten erfolgt derart, dass ihre Wirkungen optimal aufeinander abgestimmt sind. Auch ist eine langfristige Stabilität von Vitaminen und Mineralstoffen gewährleistet - sowohl hinsichtlich ihrer Bioverfügbarkeit als auch ihrer quantitativen Integrität über einen Zeitraum von mindestens sechs Monaten ohne Zusatz von synthetischen Stabilisatoren.

**In** einer weiteren bevorzugten Ausführungsform enthält die Zusammensetzung keine Öle oder ölhaltigen Inhaltsstoffe.

Die erfindungsgemäße Zusammensetzung liegt vorzugsweise in flüssiger Form vor. Die Inhaltstoffe sind üblicherweise in Form von Saftkonzentraten, Fruchtpürees und/oder Extrakten enthalten.

Erfindungsgemäß enthält die Zusammensetzung Inulin in einer Menge von 3 bis 10 Gew.-%, vorzugsweise 4,5 bis 7,5 Gew.-%, insbesondere 5,5 bis 6,5 Gew.-%, bezogen auf die fertige Zusammensetzung. Der Inulin-Gehalt kann gemäß AOAC 997.08 und AOAC 999.03 bestimmt werden. Inulin ist ein natürlicher Ballaststoff der verdauungsfördernd ist. Inulin kann z. B. aus der Zichorienwurzel oder auch aus Agavenblättern gewonnen werden.

Vorzugsweise wird Inulin mit einem mittleren Polymerisationsgrad DP zwischen 5 und 60, insbesondere zwischen 8 und 35 und besonders bevorzugt zwischen 8 und 25, eingesetzt. Neben seiner positiven Wirkung als Ballaststoff wirkt das Inulin in der vorliegenden Zusammensetzung stabilisierend auf die vorzugsweise in flüssiger Form vorliegenden Saftkonzentrate, Fruchtpürees und/oder Extrakte. Inulin ist ein Kettenpolysaccharid aus d-Fructose mit einem Polymerisationsgrad zwischen 2 und 60, die über eine β-(1-2)-glykosidische Bindung verknüpft ist. Die Inulin-Struktur erzeugt durch ihre hohe Wasserbindungsfähigkeit und Gelbildung eine mikrogelartige Matrix. Diese Matrix bildet ein kolloidales Netzwerk, das die Mobilität von gelösten Vitaminen und Mineralstoffen einschränkt und sie vor oxidativem oder hydrolytischem Abbau schützt. Die Matrix wirkt leicht säurepuffernd und stabilisiert ggf. vorhandene empfindliche Vitamine wie Ascorbinsäure (Vitamin C) und Folsäure. Die Bioverfügbarkeit der Metallionen bleibt trotz der Anwesenheit von Chelatbildnern im Wesentlichen erhalten.

Vorzugsweise werden die Früchte ausgewählt aus Sauerkirsche, Cranberry, Aronia, Acerola, Granatapfel, Hagebutte und beliebigen Mischungen der voranstehenden in Form von Fruchtsaftkonzentraten eingesetzt. Fruchtsaftkonzentrate werden aus Fruchtsaft hergestellt, der aufkonzentriert wird, indem bis zu 80% Wasser entzogen wird. In einer möglichen Ausführungsform der vorliegenden Erfindung können Fruchtsaftkonzentrate, Pürees oder Extrakte aus Früchten ausgewählt aus weißen Trauben, Orange, schwarze Johannisbeere, Süßkirsche, Maracuja, Holunder, Zitrone, rote Johannisbeere, Schlehe, Erdbeere, Ananas, Wassermelone, Sanddorn und beliebigen Mischungen der voranstehenden enthalten sein. Auch diese Früchte werden vorzugsweise als Fruchtsaftkonzentrate eingesetzt.

Einige Früchte werden vorzugsweise in Form von Püree eingesetzt, so Fruchtpürees aus Püree Papaya und Ingwer und Gemischen der voranstehenden. In einer möglichen Ausführungsform der vorliegenden Erfindung enthält die Zusammensetzung Bananenpüree.

Gemüsesaftkonzentrate werden ähnlich wie Fruchtsaftkonzentrate aus dem Gemüsesaft hergestellt, der aufkonzentriert wird. Die erfindungsgemäße Zusammensetzung enthält insbesondere Gemüsesaftkonzentrat von Roter Beete. Vorzugsweise kann die Zusammensetzung auch Gemüsesaftkonzentrat von Karotte, Pastinake, Gurke, Sauerkraut, Zwiebel, Paprikamark und beliebigen Mischungen der voranstehenden enthalten.

Vorzugsweise wird das Gemüsesaftkonzentrat aus fermentiertem Gemüsesaft erhalten. Das Fermentieren von Gemüsesaft kann auf beliebige aus der Herstellung von Lebensmitteln bekannten Fermentierungsarten erfolgen, wie zum Beispiel Milchsäuregärung, Alkoholische Gärung, Essigsäuregärung, Propionsäuregärung, Buttersäuregärung, Algenfermentation und Pilzfermentation.

Vorzugsweise wird das Gemüsesaftkonzentrat aus milchsauervergorenem oder durch mit Algen fermentiertem Gemüsesaft erhalten. die Milchsäuregärung hat den Vorteil, dass sie probiotisch wirkt, den pH-Wert senken kann und auf den Gemüsesaft konservierend wirkt. Darüber hinaus kann eine synergetische Wirkung mit dem erfindungsgemäß enthaltenen Inulin beobachtet werden, indem Inulin das Wachstum von probiotischen Milchsäurebakterien fördert, die wiederum die Matrix durch Fermentationsmetabolite (z. B. Milchsäure) stabilisieren.

Bei Pflanzenextrakten handelt es sich um Auszüge der frischen oder getrockneten Pflanzenteile auf Basis von Wasser, Öl oder Glycerin. Sie enthalten insbesondere die in den Pflanzen enthaltenen Inhaltsstoffe, beispielsweise Vitamine, Mineralstoffe, Spurenelemente, Polyphenole, Antioxidantien oder Flavonoide. Erfindungsgemäß enthält die Zusammensetzung Extrakte von Gerstengras, Ginkgo, Moringa, Spirulina grün, Shatavari, Spirulina blau, Spirulina rot, Goji, Ashwaganda, Ginseng, Grünkohl, Topinambur, Acai, Matcha, Fenchel süß, Yamswurzel, Kurkuma, Artischocke, Chicorée. Löwenzahnblätter, Grüntee, Baobab, Astragalus, Schisandra, Alfalfa, Brennnesselblätter, Guarana, Brokkoli, Kastanie, Chlorella, Amaranth, Flohsamenschalen, Leinsamen, Salbei, Zitronengras, Thymian, Rosmarin, Safran, Damian, Gotu Kola, Kichererbse, Camu Camu, Chaga, Heidelbeere, Himbeere, Zimt, Reishi, Traubenkern und beliebigen Mischungen der voranstehenden. Als weitere Extrakte können solche von Kokosnuss, Spargel, Ringelblume, Kürbiskern, Melisse, Maniok, Spinat, Eibischwurzel, Annattosaat, Aprikose und beliebige Mischungen der voranstehenden enthalten sein.

In einer weiteren Ausführungsform der vorliegenden Erfindung enthält die Zusammensetzung Vitamine und Mineralstoffe ausgewählt aus Vitamin C, Niacin, Magnesium, Vitamin E, Pantothensäure, Zink, Eisen, Vitamin B6, Vitamin B1, Vitamin B2, Mangan, Kupfer, Beta-Carotin, Folsäure, Biotin, Jod, Selen, Molybdän, Vitamin K, Chrom, Vitamin D3, Vitamin B12 und beliebige Mischungen der voranstehenden. Die voranstehend genannten Vitamine und Mineralstoffe können auch in Form von synthetisch hergestellten Produkten zugesetzt werden.

Als weitere Komponenten kann die erfindungsgemäße Zusammensetzung Vitalpilze und/oder Algen enthalten. Die Vitalpilze sind z. B. Heilpilze ausgewählt aus Lions Mane, Reishi und Charga enthalten. Vitalpilze nicht nur eine ganzheitliche Wirkung, das sie Leberfunktion und die Darmgesundheit unterstützen und positiv auf die hormonelle Balance wirken, sie aktivieren und stärken Immunsystem, sie sind adaptogen und stressregulierend und sind auch antioxidativ und entzündungshemmend. Beispiele für geeignete Algen sind Spirulina, Chlorella und Knotentang. Algen sind umweltfreundliche Lebensmittel, mit einem hohen Gehalt an Nährstoffen, insbesondere Mineralien, wie Jod, Eisen und Magnesium), Vitaminen B12, A und K sowie hochwertigen Proteinen. Algen wirken entgiftend und regen den Stoffwechsel an.

Als weitere Inhaltsstoffe kann die erfindungsgemäße Zusammensetzung Aloe Vera-Saft, Coenzym Q10 und beliebige Mischungen der voranstehenden enthalten. Darüber hinaus können Aromen enthalten sein.

**In** einer bevorzugten Ausführungsform enthält die erfindungsgemäße Zusammensetzung Sauerkirsche, Cranberry, Aronia, Acerola, Granatapfel, Hagebutte, Papaya und Ingwer, Gemüsesaftkonzentrat von milchsauervergorener Roter Beete, Extrakte von Gerstengras, Ginkgo, Moringa, Spirulina grün, Shatavari, Spirulina blau, Spirulina rot, Goji, Ashwaganda, Ginseng, Grünkohl, Topinambur, Acai, Matcha, Fenchel süß, Yamswurzel, Kurkuma, Artischocke, Chicorée. Löwenzahnblätter, Grüntee, Baobab, Astragalus, Schisandra, Alfalfa, Brennnesselblätter, Guarana, Brokkoli, Kastanie, Chlorella, Amaranth, Flohsamenschalen, Leinsamen, Salbei, Zitronengras, Thymian, Rosmarin, Safran, Damian, Gotu Kola, Kichererbse, Camu Camu, Chaga, Heidelbeere, Himbeere, Zimt, Reishi und Traubenkern. Die Früchte Sauerkirsche, Cranberry, Aronia, Acerola, Granatapfel, Hagebutte werden in dieser Ausführungsform vorzugsweise als Fruchtsaftkonzentrat eingesetzt und Papayas sowie Ingwer in Form eines Fruchtpürees.

**In** einer weiteren bevorzugten Ausführungsform enthält die Zusammensetzung
A. 20 bis 30 Gew.-% Apfel,
   2,5 bis 5 Gew.-% Sauerkirsche,
   2,5 bis 5 Gew.-% Cranberry,
   2 bis 3,5 Gew.-% Aronia,
   1,5 bis 2,5 Gew.-% Acerola,
   0,2 bis 1 Gew.-% Granatapfel,
   0,1 bis 1 Gew.-% Hagebutte
   jeweils als Fruchtsaftkonzentrate
B. 0,1 bis 1 Gew.-% Papaya,
   0,1 bis 0,2 Gew.-% Ingwer,
   0,5 bis 2 Gew.-% Banane
   jeweils in Form von Püree,
C. 2 bis 4 Gew.-% eines milchsauervergorenen Gemüsesaftkonzentrats aus Roter Beete, Karotte, Pastinake, Gurke, Sauerkraut, Zwiebel und Paprikamark,
D. 5 bis 6,5 Gew.-% Inulin,
E. 0,08 bis 0,25 Gew.-% Aloe Vera-Saft
F. 10 bis 15 Gew.-% einer löslichen Vitamin- und Mineralstoffmischung enthaltend Vitamin C, Niacin, Magnesium, Vitamin E, Pantothensäure, Zink, Eisen, Vitamin B6, Vitamin B1, Vitamin B2, Mangan, Kupfer, Beta-Carotin, Folsäure, Biotin, Jod, Selen, Molybdän, Vitamin K, Chrom, Vitamin D3, Vitamin B12
G. 2,5 bis 5 Gew.-% eines flüssigen Kräuterextrakts enthaltend Gerstengras, Ginkgo, Moringa, Spirulina grün, Shatavari, Kokosnuss, Spirulina blau, Spirulina rot, Goji, Ashwaganda, Ginseng, Grünkohl, Topinambur, Acai, Matcha, Fenchel süß, Yamswurzel, Kurkuma, Artischocke, Chicorée. Löwenzahnblätter, Grüntee, Baobab, Astragalus, Spargel, Schisandra, Alfalfa, Brennnesselblätter, Guarana, Ringelblume, Brokkoli, Johannesbrotkern, Kastanie, Chlorella, Traubenkern, Maniok, Spinat, Amaranth, Flohsamenschalen, Leinsamen, Salbei, Zitronengras, Thymian, Rosmarin, Safran, Eibischwurzel, Damian, Gotu Kola, Kichererbse, Annattosaat, Camu Camu, Chaga, Heidelbeere, Himbeere, Aprikose, Zimt, Reishi,
wobei sich die Gesamtmenge auf 100 Gew.-% addiert.

Ein weiterer Gegenstand der vorliegenden Erfindung ist ein Verfahren zur Herstellung der voranstehend beschriebenen Zusammensetzung, in welchem die Inhaltsstoffe in Form von Konzentraten, Pürees und/oder Extrakten vermischt werden. Falls erforderlich kann durch Zugabe von Wasser die gewünschte Konzentration der Inhaltsstoffe eingestellt werden.

Ein weiterer Gegenstand der vorliegenden Erfindung ist die Verwendung der voranstehend beschriebenen Zusammensetzung als Nahrungsergänzungsmittel.

### Beispiele

In der Tabelle sind mögliche Ausführungsformen der vorliegenden Erfindung dargestellt:

| | **1** | **2** |
|---|---|---|
| **Inhaltsstoff** | **Menge, Gew.-%** | **Menge, Gew.-%** |
| **Fruchtsaftkonzentrat flüssig enthaltend** | **71,000%** | **71,000** |
| Apfel | 23,146% | 23,146% |
| Traube, weiß | 9,088% | 9,088% |
| Orange | 5,321% | 5,321% |
| Sauerkirsche | 4,821% | 4,821% |
| Cranberry | 3,496% | 3,496% |
| schwarze Johannisbeere | 3,396% | 3,396% |
| Maracuja | 3,218% | 3,218% |
| Süßkirsche | 3,155% | 3,155% |
| Holunder | 2,239% | 2,239% |
| Zitrone | 2,138% | 2,138% |
| Aronia | 2,002% | 2,002% |
| Acerola | 1,911% | 1,911% |
| rote Johannisbeere | 1,742% | 1,742% |
| Schlehe | 1,245% | 1,245% |
| Erdbeere | 1,569% | 1,569% |
| Ananas | 1,049% | 1,049% |
| Hagebutte | 0,523% | 0,523% |
| Granatapfel | 0,418% | 0,418% |
| Sanddorn | 0,314% | 0,314% |
| Wassermelone | 0,209% | 0,209% |
| **Fruchtpüree flüssig enthaltend** | **3,500%** | **3,500%** |
| Banane | 1,480% | 1,480% |
| Papaya | 1,292% | 1,292% |
| Ingwer | 0,728% | 0,728% |
| **Gemüsesaftkonzentrat, flüssig, milchsauer vergoren enthaltend** | **2,839%** | **3,5%** |
| Karotte | | |
| Pastinake | | |
| Gurke | | |
| Sauerkraut | | |
| Rote -Bete | | |
| Zwiebel | | |
| Paprikamark | | |
| Zitronensaft | | |
| **Inulin** | **5,80%** | **6** |
| **durchschnittlicher DP** | **10** | **15** |
| **Aloe Vera-Saft** | **0,101%** | **1** |
| **Coenzym Q10** | **0,060%** | **0,6** |
| **lösliche Vitaminmischung enthaltend** | **12,00** % | **10,8** |
| Vitamin C | 250,00mg | |
| Niacin | 40,00mg | |
| Magnesium | 30,00mg | |
| Vitamin E | 12,00mg | |
| Pantothensäure | 8,00mg | |
| Zink | 5,00mg | |
| Eisen | 4,00mg | |
| Vitamin B6 | 3,50mg | |
| Vitamin B1 | 3,00mg | |
| Vitamin B2 | 2,50mg | |
| Mangan | 0,50mg | |
| Kupfer | 0,25mg | |
| Beta-Carotin | 555,00µ | |
| Folsäure | 200,00µ | |
| Biotin | 50,00µ | |
| Jod | 50,00µ | |
| Selen | 45,00µ | |
| Molybdän | 40,00µ | |
| Vitamin K | 30,00µ | |
| Chrom | 20,00µ | |
| Vitamin D3 | 20,00µ | |
| Vitamin B12 | 5,00µ | |
| **natürliches Aroma flüssig enthaltend** | **0,70 %** | **0,4** |
| Apfel-Aroma ( | 0,51% | 0,267 |
| Himbeer-Aroma | 0,19% | 0,133 |
| **Kräuterextrakt, flüssig, enthaltend** | **4,00** | **3,5** |
| Gerstengras | 1,511 | 0,4 |
| Ginkgo | 0,37 | 0,4 |
| Moringa | 0,35 | 0,4 |
| Spirulina grün | 0,35 | 0,4 |
| Heidelbeere | - | 0,4 |
| Lions Mane | | 0,025 |
| Knotentang | | 0,025 |
| Shatavari | 0,35 | - |
| Goji | 0,322 | 0,025 |
| Kokosnuss | 0,15 | 0,025 |
| Spirulina blau | 0,012 | |
| Leinsamen | | 0,025 |
| Ginsengwurzel | 0,055 | 0,025 |
| Grünkohl | 0,055 | 0,025 |
| Topinambur | 0,048 | 0,025 |
| Ashwaganda | 0,011 | - |
| Acai | 0,011 | 0,025 |
| Matcha | 0,011 | 0,025 |
| Fenchel süß | 0,011 | 0,025 |
| Yamswurzel | 0,011 | - |
| Kurkuma | 0,011 | 0,025 |
| Artischocke | 0,011 | 0,025 |
| Chicorée | 0,011 | 0,025 |
| Löwenzahnblätter | 0,011 | 0,025 |
| Grüntee | 0,011 | 0,025 |
| Baobab | 0,011 | 0,025 |
| Astragalus | 0,011 | 0,025 |
| Spargel | 0,011 | 0,025 |
| Schisandra | 0,011 | 0,025 |
| Alfalfa | 0,011 | - |
| Schisandra | | 0,025 |
| Brennnesselblätter | 0,011 | 0,025 |
| Guarana Extrakt | 0,011 | 0,025 |
| Ringelblume | 0,01 | 0,025 |
| Brokkoli | 0,01 | 0,025 |
| Johannisbrotkern | 0,01 | - |
| Kastanie | 0,01 | - |
| Chlorella | 0,01 | 0,025 |
| Kürbiskern | 0,01 | 0,025 |
| Maniok | 0,01 | |
| Chlorella | | 0,025 |
| Melisse | | 0,025 |
| Spinat | 0,01 | 0,025 |
| Amaranth | 0,01 | 0,025 |
| Flohsamenschalen | 0,01 | 0,025 |
| Salbei | 0,01 | 0,025 |
| Zitronengras | 0,01 | 0,025 |
| Eibischwurzel | 0,01 | 0,025 |
| Damian | 0,01 | 0,025 |
| Gotu Kola | 0,01 | - |
| Kichererbse | 0,01 | 0,025 |
| Annattosaat | 0,01 | 0,025 |
| Camu Camu | 0,01 | 0,025 |
| Chaga | 0,01 | 0,025 |
| Himbeere | 0,01 | 0,025 |
| Aprikose | 0,01 | 0,025 |
| Zimt | 0,01 | 0,025 |
| Reishi | 0,01 | 0,4 |
| Traubenkern | 0,01 | 0,025 |
| Rosmarin | | 0,025 |
| Thymian | | 0,025 |
| Safran | | 0,025 |

Diese Zusammensetzung kann als Nahrungsergänzungsmittel zu jeder Tageszeit getrunken werden. Um die optimale Wirkung zu erzielen, wird empfohlen, 10 ml in 90 ml Flüssigkeit, vorzugsweise Wasser, einzurühren und es morgens auf leeren Magen einzunehmen.

## Patentansprüche

1. Zusammensetzung zur Unterstützung des menschlichen Immunsystems, insbesondere zur Verwendung als Nahrungsergänzungsmittel, enthaltend Saftkonzentrate, Fruchtpürees und/oder Extrakte aus Acerola Früchten und Gemüsen ausgewählt aus Apfel, Sauerkirsche, Cranberry, Aronia, Acerola, Granatapfel, Hagebutte, Papaya, Ingwer, Rote Beete, Gerstengras, Ginkgo, Moringa, Spirulina grün, Shatavari, Spirulina blau, Spirulina rot, Goji, Ashwaganda, Ginseng, Grünkohl, Topinambur, Acai, Matcha, Fenchel süß, Yamswurzel, Kurkuma, Artischocke, Chicorée. Löwenzahnblätter, Grüntee, Baobab, Astragalus, Schisandra, Alfalfa, Brennnesselblätter, Guarana, Brokkoli, Kastanie, Chlorella, Amaranth, Flohsamenschalen, Leinsamen, Salbei, Zitronengras, Thymian, Rosmarin, Safran, Damian, Gotu Kola, Kichererbse, Camu Camu, Chaga, Heidelbeere, Himbeere, Zimt, Reishi, Traubenkern und beliebigen Mischungen der voranstehenden,
**dadurch gekennzeichnet, dass** die Zusammensetzung 3 bis 10% Inulin als Ballaststoff enthält.

2. Zusammensetzung nach Anspruch 1, **dadurch gekennzeichnet, dass** die Zusammensetzung in flüssiger Form vorliegt.

3. Zusammensetzung nach Anspruch 1 oder 2, **dadurch gekennzeichnet, dass** das Inulin einen durchschnittlichen Polymerisationsgrad DP zwischen 5 und 60, vorzugsweise zwischen 8 und 35 aufweist.

4. Zusammensetzung nach einem der vorhergehenden Ansprüche, **dadurch gekennzeichnet, dass** das Inulin einen durchschnittlichen Polymerisationsgrad DP zwischen 8 und 25 aufweist.

5. Zusammensetzung nach einem der vorhergehenden Ansprüche, **dadurch gekennzeichnet, dass** Fruchtsaftkonzentrat aus Früchten ausgewählt aus weißen Trauben, Orange, schwarze Johannisbeere, Süßkirsche, Maracuja, Holunder, Zitrone, rote Johannisbeere, Schlehe, Erdbeere, Ananas, Wassermelone, Sanddorn und beliebigen Mischungen der voranstehenden enthalten ist.

6. Zusammensetzung nach einem der vorhergehenden Ansprüche, **dadurch gekennzeichnet, dass** Püree von Bananen enthalten ist.

7. Zusammensetzung nach einem der vorhergehenden Ansprüche, **dadurch gekennzeichnet, dass** Gemüsesaftkonzentrat von Karotte, Pastinake, Gurke, Sauerkraut, Zwiebel, Paprikamark und beliebigen Mischungen der voranstehenden enthalten ist.

8. Zusammensetzung nach einem der vorhergehenden Ansprüche, **dadurch gekennzeichnet, dass** das Gemüsesaftkonzentrat aus fermentiertem Gemüsesaft erhalten ist.

9. Zusammensetzung nach Anspruch 7, **dadurch gekennzeichnet, dass** das fermentierte Gemüsesaftkonzentrat durch Milchsäuregärung oder durch Algenfermentation erhalten ist.

10. Zusammensetzung nach einem der vorhergehenden Ansprüche, **dadurch gekennzeichnet, dass** Extrakte von Kokosnuss, Spargel, Ringelblume, Kürbiskern, Melisse, Maniok, Spinat, Eibischwurzel, Annattosaat, Aprikose und beliebige Mischungen der voranstehenden enthalten sind.

11. Zusammensetzung nach einem der vorhergehenden Ansprüche, **dadurch gekennzeichnet, dass** Vitamine und Mineralstoffe ausgewählt aus Vitamin C, Niacin, Magnesium, Vitamin **E,** Pantothensäure, Zink, Eisen, Vitamin B6, Vitamin B1, Vitamin B2, Mangan, Kupfer, Beta-Carotin, Folsäure, Biotin, Jod, Selen, Molybdän, Vitamin K, Chrom, Vitamin D3, Vitamin B12 und beliebige Mischungen der voranstehenden enthalten sind.

12. Zusammensetzung nach einem der vorhergehenden Ansprüche, **dadurch gekennzeichnet, dass** Vitalpilze und/oder Algen enthalten sind.

13. Zusammensetzung nach einem der vorhergehenden Ansprüche, **dadurch gekennzeichnet, dass** als weitere Inhaltsstoffe Inulin, Aloe Vera-Saft, Coenzym Q10 und beliebige Mischungen der voranstehenden enthalten sind.

14. Zusammensetzung nach einem der vorhergehenden Ansprüche, **dadurch gekennzeichnet, dass** sie
A. 20 bis 30 Gew.-% Apfel,
2,5 bis 5 Gew.-% Sauerkirsche,
2,5 bis 5 Gew.-% Cranberry,
2 bis 3,5 Gew.-% Aronia,
1,5 bis 2,5 Gew.-% Acerola,
0,2 bis 1 Gew.-% Granatapfel,
0,1 bis 1 Gew.-% Hagebutte
jeweils als Fruchtsaftkonzentrate
B. 0,1 bis 1 Gew.-% Papaya,
0,1 bis 0,2 Gew.-% Ingwer,
0,5 bis 2 Gew.-% Banane
jeweils in Form von Püree,
C. 2 bis 4 Gew.-% eines milchsauervergorenen Gemüsesaftkonzentrats aus Roter Beete, Karotte, Pastinake, Gurke, Sauerkraut, Zwiebel und Paprikamark,
D. 5 bis 6,5 Gew.-% Inulin,
E. 0,08 bis 0,25 Gew.-% Aloe Vera-Saft
F. 10 bis 15 Gew.-% einer löslichen Vitamin- und Mineralstoffmischung enthaltend Vitamin C, Niacin, Magnesium, Vitamin E, Pantothensäure, Zink, Eisen, Vitamin B6, Vitamin B1, Vitamin B2, Mangan, Kupfer, Beta-Carotin, Folsäure, Biotin, Jod, Selen, Molybdän, Vitamin K, Chrom, Vitamin D3, Vitamin B12
G. 2,5 bis 5 Gew.-% eines flüssigen Kräuterextrakts enthaltend Gerstengras, Ginkgo, Moringa, Spirulina grün, Shatavari, Kokosnuss, Spirulina blau, Spirulina rot, Goji, Ashwaganda, Ginseng, Grünkohl, Topinambur, Acai, Matcha, Fenchel süß, Yamswurzel, Kurkuma, Artischocke, Chicorée. Löwenzahnblätter, Grüntee, Baobab, Astragalus, Spargel, Schisandra, Alfalfa, Brennnesselblätter, Guarana, Ringelblume, Brokkoli, Johannesbrotkern, Kastanie, Chlorella, Traubenkern, Maniok, Spinat, Amaranth, Flohsamenschalen, Leinsamen, Salbei, Zitronengras, Thymian, Rosmarin, Safran, Eibischwurzel, Damian, Gotu Kola, Kichererbse, Annattosaat, Camu Camu, Chaga, Heidelbeere, Himbeere, Aprikose, Zimt, Reishi,
wobei sich die Gesamtmenge auf 100 Gew.-% addiert.

15. Verwendung der Zusammensetzung nach einem der Ansprüche 1 bis 11 als Nahrungsergänzungsmittel.
